· Europäisches Patentamt

European Patent Office

Office européen des brevets

(19)

(11) Veröffentlichungsnummer: **0 249 802**

**A2**

(12) **EUROPÄISCHE PATENTANMELDUNG**

(21) Anmeldenummer: 87108002.4

(51) Int. Cl.4: **G01N 27/56**

(22) Anmeldetag: 03.06.87

(30) Priorität: 14.06.86 DE 3620092

(43) Veröffentlichungstag der Anmeldung:
23.12.87 Patentblatt 87/52

(84) Benannte Vertragsstaaten:
**DE FR GB SE**

(71) Anmelder: **Drägerwerk Aktiengesellschaft
Moislinger Allee 53-55
D-2400 Lübeck 1(DE)**

(72) Erfinder: **Schlechtriemen, G. L., Dr. rer. nat.
Dipl.-Chem.
Morkerke Strasse 12
D-2400 Lübeck(DE)**
Erfinder: **Weppner, Werner, Dr. Dipl.-Phys.
Weinbergweg 20 A
D-7000 Stuttgart 80(DE)**
Erfinder: **Hötzel, Gerhard, Dipl.-Chem.
Taubenheimstrasse 108
D-7000 Stuttgart 50(DE)**

(54) **Galvanische Festkörperkette zur Messung des O2-Partialdruckes.**

(57) Eine galvanische Festkörperkette zur Messung des $O_2$-Partialdruckes, welche einen festen Ionenleiter aufweist, der auf der einen Seite eine Referenzphase und auf der anderen Seite eine gassensitive Phase mit den zugehörigen Ableitelektroden enthält, soll derart verbessert werden, daß sie schon bei deutlich niedrigeren Betriebstemperaturen als z.B. 600°C eine ausreichende Ansprechgeschwindigkeit besitzt. Dazu ist ein fester Silber-Ionenleiter vorgesehen, welcher mit einer Referenzphase von festgelegter Silberaktivität sowie mit einer gassensitiven Phase, bestehend aus einer Silberoxidverbindung, kombiniert ist.

E / mV

260    280    300    320    340

$\lg(P_{O_2}/\text{atm})$    −1    −2    −3

EP 0 249 802 A2

## Galvanische Festkörperkette zur Messung des $O_2$-Partialdruckes

Die Erfindung betrifft eine galvanische Festkörperkette zur Messung des $O_2$-Partialdruckes, welche einen festen Ionenleiter aufweist, der auf der einen Seite eine Referenzphase une auf der anderen Seite eine gassensitive Phase mit den zugehörigen Ableitelektroden enthält. Außerdem wird ein Verfahren zur Herstellung des Festelektrolyten angegeben.

Bei der Bestimmung von Sauerstoffpartialdrücken durch Messung von elektromotorischen Kräften galvanischer Festkörperketten wird üblicherweise kubisch stabilisiertes Zirkondioxid als fester Sauerstoffionenleiter in derartigen Festkörperketten verwendet, wobei ein Temperatureinsatzbereich von typisch oberhalb von 600°C vorliegt. In der Ausgestaltung als Lambda-Sonde wird ein derartiger Festelektrolytsensor zur Messung von Sauerstoffpartialdrücken in Abgasen von Verbrennungskraftmaschinen eingesetzt, was z.B. in der Literaturstelle "Adv. Electrochem. Eng. Vol. 10, Eds. H. Gerischer, C.W. Tobias, pp. 1-90, Wiley & Sons, N.Y. 1977" dargestellt ist.

Eine weitere derartige Sonde ist aus der DE-OS 28 37 593 bekanntgeworden.

Die hohen Einsatztemperaturen der bekannten Sonden sind durch den Umstand bestimmt, daß erst bei diesen Temperaturen hinreichend große Ansprechgeschwindigkeiten zu beobachten sind. Bei Temperaturen unter 600°C sind praktisch keine Anwendungen solcher kubisch stabilisiertes Zirkondioxid als Sauerstoffionenleiter enthaltenden Festkörperketten zur $O_2$-Partialdruckbestimmung möglich.

Somit liegt der Erfindung die Aufgabe zugrunde, eine galvanische Festkörperkette der genannten Art so zu verbessern, daß sie schon bei deutlich niedrigeren Temperaturen eine ausreichende Ansprechgeschwindigkeit aufweist.

Die Lösung der Aufgabe besteht darin, daß ein fester Silber-Ionenleiter vorgesehen ist, welcher mit einer Referenzphase von festgelegter Silberaktivität sowie mit einer gassensitiven Phase, bestehend aus einer Silberoxidverbindung, kombiniert ist.

Eine derartige Festkörperkette ermöglicht den Aufbau von schnell ansprechenden Sensoren zur Messung von Sauerstoffpartialdrücken, die eine Betriebstemperatur von weit unter 600°C benötigen und dadurch energiesparend betrieben werden können. Ein besonders vorteilhafter Silberionenleiter ist Silberiodid (AgI), da dieser schon bei etwa 150°C Betriebstemperatur auswertbare Meßsignale liefert.

Durch Verwendung von Silber-Rubidium-Iodid ($Ag_4 RbI_5$) kann die Betriebstemperatur sogar auf nahezu Raumtemperatur gesenkt werden.

Weitere Vorteile der Erfindung liegen im wesentlichen darin, daß nunmehr Werkstoffe eingesetzt werden können, die nicht hochtemperaturbeständig sein müssen, und die auch nicht mehr solch extremen Temperaturschwankungen und -schocks ausgesetzt sind, wenn ein Wechsel zwischen Betriebstemperatur und Umgebungstemperatur durch Ein-und Ausschalten eines mit der Festkörperkette ausgestatteten Sensors erfolgt.

Weiterhin kann die Festkörperkette auch an kälteren Meßstellen eingesetzt werden, so daß auch alle Zuführungsleitungen sowie Meßkopf-Halterungen keine hohe Temperaturbeständigkeit aufweisen müssen.

Trotz der niedrigen Betriebstemperaturen ist der Widerstand der Festkörperkette soweit erniedrigt, daß angeschlossene Auswerteeinheiten mit niedrigerem Eingangswiderstand ohne große Schwierigkeiten angeschlossen werden können.

Die der Gasphase mit dem zu bestimmenden Sauerstoffpartialdruck exponierte Seite des Silberiodids ist mit einer porösen Platinkatalysatorelektrode z.B. in Netzform bedeckt, wobei dieses Platinnetz mit z.B. einer Platinableitung elektrisch verbunden ist. Die Referenzelektrode besteht vorzugsweise aus reinem Silber, das durch Aufdampfen oder Sputtern in Form eines Filmes auf einer Seite des Silberionenleiters aufgebracht wird, bzw. bei Verwendung massiven Silbers gegen die Stirnfläche des Ionenleiters gepreßt wird. Als Referenzphasen kommen aber auch alle anderen Materialien mit festgelegter Silberaktivität in Frage. Auch die Ausgestaltung der porösen Platinierung bzw. Metallisierung, wenn ein anderes katalytisch aktives Metall oder eine Legierung aufgebracht wird, kann in geeigneter Weise modifiziert werden.

Eine solche galvanische Festkörperkette ist - schematisch, wie nachfolgend dargestellt, aufgebaut:

Ableitelektr. Ag | AgI | Pt (por.)-+ Ableitelektr.|Meßgas,$pO_2$

Die mit der zwischen den Ableitelektroden auftretenden Potentialdifferenz verknüpfte Zellreaktion stellt die Bildung einer binären Silberoxidphase als gassensitive Phase dar, was allgemein durch folgende Reaktionsgleichung beschrieben werden kann:

$$xAg(s) + \frac{y}{2} O_2 (g) \rightarrow Ag_xO_y(s)$$

Ein besonders schnelles Ansprechverhalten der Festkörperkette wird dadurch erzielt, daß Silberiodid in der $\alpha$-Phase benutzt wird. Vor allem die in der $\alpha$-Phase existierenden strukturellen Verhältnisse sind für die außergewöhnlich große Beweglichkeit der $Ag^+$-Ionen verantwortlich und erklären die hohe Silberionenleitfähigkeit. Die bei dieser Temperatur vorhandene Plastizität des α - AgI erlaubt ebenfalls die Ausbildung einer niederohmigen Phasengrenze ( **i** ) zur benachbarten Ag-Referenzphase, was eine reproduzierbare und reversible Ankopplung der Referenzaktivität an den Ionenleiter deutlich verbessert.

Auch das Kontaktieren des α -AgI mit dem Platinnetz auf der gegenüberliegenden Stirnfläche ( **ii** ) des Ionenleiters unter Ausbildung der Meßelektrode wird durch die oben erwähnte Plastizität des Silberiodids erleichtert.

Neben dem schnellen Silberionenleiter α-AgI, der Hochtemperaturphase des Silberiodids, die oberhalb der Transformationstemperatur von 147°C stabil ist, kann auch die bei Raumtemperatur stabile Modifikation, die β -Phase, verwendet werden. Deren im Vergleich zur α -Phase deutlich kleinere Silberionenleitfähigkeit kann durch Dotieren mit Blei-oder Cadmiumiodid ($PbI_2$ oder $CdI_2$) unter Ausbildung von Fehlstellen im so entstehenden Mischkristall in Richtung größerer Werte verändert werden. Eine solche Dotierung ist aber auch bei Verwendung der α -Phase des AgI geeignet, die Silberionenleitfähigkeit zu erhöhen.

Bei Verwendung von Blei-bzw. Cadmiumioddotiertem Silberiodid ist die Bildung von ternären, also neben Silber auch Blei bzw. Cadmium enthaltenden Oxidphasen möglich, welche zur Ankopplung der durch den Partialdruck von Sauerstoff in der umgebenden Gasphase vorliegenden Sauerstoffaktivität an die Silberaktivität dienen. Für diese im allgemeinsten Falle multinären Oxidphasen als gassensitive Schichten auf der Meßseite der galvanischen Festkörperkette ist jedoch die Bedingung zu erfüllen, daß die zusätzlichen Komponenten in ihrer thermodynamischen Aktivität praktisch nicht durch Sauerstoffpartialdruckänderungen beeinflußt werden. Als gassensitive Schicht einer solchen Zelle kommt auch eine binäre Bleioxidphase ($PbO_x$) in Frage, wenn ein bleihaltiger Silberiodidmischkristall die Funktion des Festelektrolyten übernimmt.

Bei einem Verfahren zur Herstellung des Festelektrolyten in einer Festkörperkette kann in vorteilhafter Weise auf die Oberfläche der Referenzelektrode eine dampfförmige Iodverbindung einwirken und die Ausbildung des Silberiodids zum Festelektrolyt als Dünnschicht erfolgen.

Ein einfaches Verfahren, um eine gassensitive Schicht auf dem Festelektrolyten zu erzeugen, besteht darin, den Festelektrolyten einer Sauerstoffatmosphäre auszusetzen und somit eine $Ag_xO_y$ - Schicht in situ zu bilden.

Im folgenden werden Ergebnisse von Untersuchungen vorgestellt, die an Zellen mit reinem Silberiodid als Ionenleiter, und zwar der Hochtemperaturphase, erhalten wurden, wobei die Abhängigkeit der Zell-EMK vom Sauerstoffpartialdruck im Meßgas erfaßt werden sollte.

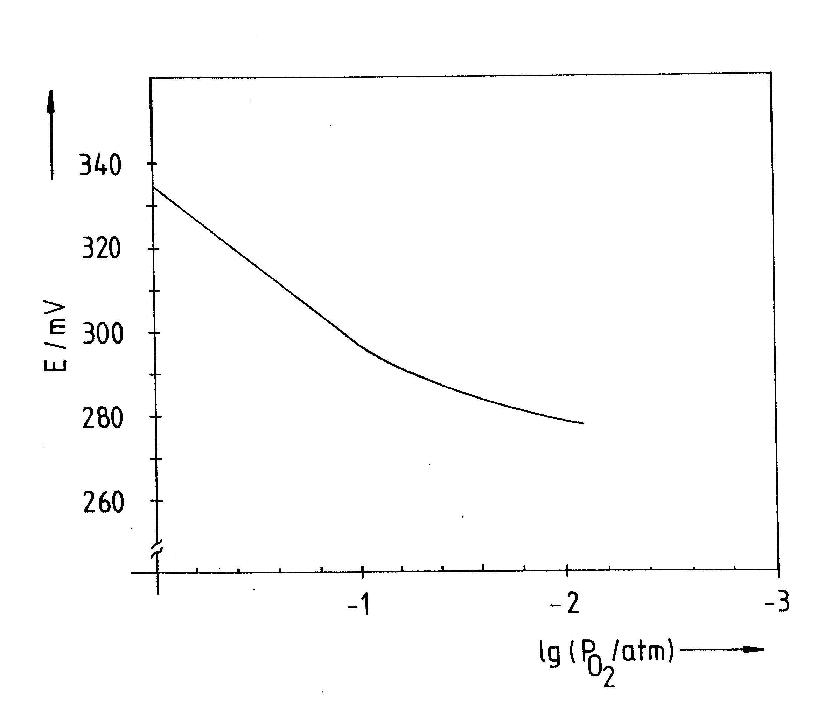

In der einzigen Figur ist ein Koordinatensystem gezeigt, dessen Kurve (K) die an der galvanischen Festkörperkette abgreifbare Potentialdifferenz als EMK (elektromotorische Kraft) in mV als Funktion des nachzuweisenden Sauerstoffpartialdruckes, aufgetragen als negativer Logarithmus des $P_{O_2}$, darstellt.

Die gemessenen Zellspannungen sind in reproduzierbarer Weise vom Sauerstoffpartialdruck in der Meßgasphase abhängig. Allerdings stimmen diese Werte nicht mit denen überein, die sich auf der Grundlage vorliegender thermodynamischer Daten zur obigen Bildungsreaktion errechnen lassen. Als mögliche Ursache dafür kommt in Frage, daß die sich meßseitig einstellende Silberaktivität an den Vierphasenkontaktpunkten vom Typ α-AgI|Ag₂O| Pt|Gas einer durch die dem Silberiodid inhärenten Silberaktivität beeinflußten Mischpotentialausbildung entspricht. Die gemessenen Ansprechzeiten liegen bei ca. 1 min. Sofern keine bei der Temperatur von ca. 150°C unter der Wirkung des Katalysators mit dem Sauerstoff reagierenden Komponenten in der Gasphase auftreten und/oder die Bildung von Verbindungen - analog der für Sauerstoff oben angegebenen Reaktion - auf der Meßseite durch Reaktion von Silberiodid mit diesen Komponenten ausgeschlossen werden kann, liegt eine praktisch zu handhabende Festkörperkette zur Bestimmung von $O_2$-Partialdrücken mittels EMK-Messungen vor.

Bei der konkreten Herstellung der Festkörperkette kann man außerdem von der Tatsache Gebrauch machen, daß bei höheren Temperaturen Silber mit einer gasförmigen iodhaltigen Spezies wie z.B. HI (Iodwasserstoff) oder auch mit Dampf aus elementarem Iod reagiert, also die Bildung eines geschlossenen Silberiodidfilms direkt aus der Gasphase erfolgt, was eine Dünnfilmrealisierung des Ionenleiters mit optimierter Phasengrenze zur darunterliegenden Silberreferenz ermöglicht. Dadurch läßt sich die Zellimpedanz noch weiter reduzieren, wodurch die quasi stromlose Messung der elektrischen Potentialdifferenz zwischen der mit dem Silber in Kontakt stehenden Referenzableitelektrode und der mit der im Anschluß an die Dünnfilmbildung des Ionenleiters auf letzteren aufzubringenden porösen Meßelektrode in Verbindung stehenden Ableitung erleichtert wird.

## Ansprüche

1. Galvanische Festkörperkette zur Messung des $O_2$-Partialdruckes, welche einen festen Ionenleiter aufweist, der auf der einen Seite eine Referenzphase und auf der anderen Seite eine gassensitive Phase mit den zugehörigen Ableitelektroden enthält, dadurch gekennzeichnet, daß ein fester Silber-Ionenleiter vorgesehen ist, welcher mit einer Referenzphase von festgelegter Silberaktivität sowie mit einer gassensitiven Phase, bestehend aus einer Sibleroxidverbindung, kombiniert ist.

2. Galvanische Festkörperkette nach Anspruch 1, dadurch gekennzeichnet daß als fester Ionenleiter Silberiodid (AgI) vorgesehen ist.

3. Galvanische Festkörperkette nach Anspruch 1, dadurch gekennzeichnet, daß als fester Ionenleiter Silber-Rubidium-Iodid ($Ag_4RbI_5$) vorgesehen ist.

4. Galvanische Festkörperkette nach Anspruch 2, dadurchgekennzeichnet, daß als fester Ionenleiter $\alpha$-Silberiodid enthalten ist.

5. Galvanische Festkörperkette nach Anspruch 2, dadurch gekennzeichnet, daß als fester Ionenleiter $\beta$-Silberiodid enthalten ist.

6. Galvanische Festkörperkette nach einem der Ansprüche 2, 4 und 5, dadurch gekennzeichnet, daß der feste Ionenleiter mit einer zusätzlich Iod-Verbindung dotiert ist.

7. Galvanische Festkörperkette nach Anspruch 6, dadurch gekennzeichnet, daß die Dotierung aus Bleiiodid ($PbI_2$) besteht.

8. Galvanische Festkörperkette nach Anspruch 6, dadurch gekennzeichnet, daß die Dotierung aus Cadmiumiodid ($CdI_2$) besteht.

9. Verfahren zur Herstellung eines Festelektrolyten in einer Festkörperkette nach Anspruch 2, dadurch gekennzeichnet, daß auf die Oberfläche der Referenzelektrode aus Silber dampfförmiges Iod einwirkt und der Festelektrolyt als eine Dünnschicht ausgebildet wird.

10. Verfahren zur Herstellung einer gassensitiven Schicht in einer Festkörperkette nach Anspruch 1, dadurch gekennzeichnet, daß die gassensitive Schicht durch Einwirkung der nachzuweisenden Sauerstoffkomponente auf den Festelektrolyten erzeugt wird.

0 249 802